# EUROPEAN PATENT APPLICATION

(11) **EP 3 412 714 A1**
(43) Date of publication of application: **12.12.2018**
(21) Application number: 17747584.5
(22) Date of filing: 03.02.2017
(51) Int. Cl.: C08J 5/18, A23B 7/144, B32B 9/00, B65D 85/50, B65D 85/52

(54) **FUNCTIONAL FILM, FUNCTIONAL CONTAINER, AND METHOD FOR RETAINING FRESHNESS**

(30) Priority: 04.02.2016 JP 2016019560
(71) Applicant: Kawakami, Shigeki, Toyonaka-shi, Osaka 560-0003 (JP); Nissho Chemical Co., Ltd, Mito-shi, Ibaraki 310-0836 (JP); Nissan Steel Industry Co., Ltd., Kizugawa-shi, Kyoto 619-1101 (JP); Going Co., Ltd, Ibaraki-shi, Osaka 567-0047 (JP)
(72) Inventor: KAWAKAMI, Shigeki, Ibaraki-shi Osaka 567-0047 (JP); SASAKI, Masato, Mito-shi Ibaraki 310-0836 (JP); NISHIBE, Kiyoshi, Souraku-gun Kyoto 619-1411 (JP)
(74) Representative: IPAZ
(86) International application number: PCT/JP2017/004049
(87) International publication number: WO 2017/135433

(57) **Abstract**

To obtain a functional film capable of efficiently adsorbing and decomposing ethylene, a functional container, and a method for retaining the freshness of plants or foods.

This functional film is obtained by causing a substance having a catalytic ability to decompose ethylene to be contained in, or applied or vapor-deposited on the surface of, a plastic film material having an ethylene-adsorbing effect. This functional container is obtained by causing a substance having a catalytic ability to decompose ethylene to be contained in, or applied or vapor-deposited on the surface of, a plastic material having an ethylene-adsorbing effect. Alternatively, this functional container may be obtained by causing a substance having a catalytic ability to decompose ethylene to be contained in a plastic material having an ethylene-adsorbing effect and molding the plastic material into a prescribed shape, or by applying or vapor-depositing the substance on the surface of the plastic material after molding said plastic material into a prescribed shape. This method for retaining freshness includes a step for adsorbing and decomposing, and/or discharging, the ethylene generated from plants and the like using said functional film or said functional container.

## Description

### TECHNICAL FIELD

The present invention relates to a functional film and a functional container which are used for retaining freshness of a plant or a food (particularly a fresh food, a fruit or vegetable, or the like) (including retention of growth of a plant), and a method for retaining freshness of a plant or a food using the functional film or the functional container.

### BACKGROUND ART

Techniques capable of preserving organisms fresh while maintaining a growth potential at individual and tissular levels are important because these techniques can be applied not only to conservation of rare plants but also to preservation of vegetable and fruit seedlings amid the fear of worldwide food crises. On the other hand, techniques are also desired for a long-term preservation of living biological samples in fields that contribute to storage and transportation of ornament plants such as cut flowers for decoration, and mushrooms. However, while techniques for cryopreservation of an animal or plant at a cellular level have been established, there are few techniques for preservation of an animal or plant at individual and tissular levels, preservation of an animal or plant in the state of being alive (maintaining energy consumption activity), and effective preservation of the taste of a plant or food.

In view of these backgrounds, a new method has been recently required for minimizing gene expression and translation reaction which are involved in programmed self-digestion/fusion reaction that damages plant tissues themselves by ethylene, and elimination of energy substances such as NADP and ATP in organism bodies, which proceeds due to long-term preservation of a plant.

### CITATIONS LISTS

### PATENT LITERATURES

Non-Patent Literature 1: Journal of the Japanese Society for Horticultural Science.37.(3)256-260, 1968
Non-Patent Literature 2: Kagawa Prefecture Agricultural Experiment Station Research Report No. 34 (October 1982) 44-53
Non-Patent Literature 3: Kagawa Prefecture Agricultural Experiment Station Research Report No. 35 (October 1983) 39-49
Non-Patent Literature 4: Food Preservation Science VOL. 24 NO. 6 1998
Non-Patent Literature 5: Food Preservation Science VOL. 33 NO. 3 2007
Non-Patent Literature 6: Nagasaki Agricultural and Forestry Technical Development Center Research Report No. 2, 97-118, 2011

Patent Literature 1: Japanese Patent Laid-open Publication No. 9-196545
Patent Literature 2: Japanese Patent Laid-open Publication No. 2009-35327
Patent Literature 3: Japanese Patent Laid-open Publication No. 2010-207223

### SUMMARY OF THE INVENTION

### PROBLEMS TO BE SOLVED BY THE INVENTION

Plastic films have different physical properties (water vapor permeability and gas permeability) depending on the material, stretching method, and thickness. For example, a film that is used with a fruit or vegetable generally has low water vapor permeability and high gas permeability (polyethylene), and the internal humidity is nearly 100%, so that transpiration of a fruit or vegetable is suppressed. Therefore, plastic film packagings can completely suppress shrinkage caused by transpiration action of a fruit or vegetable, so that degradation of freshness of a fruit or vegetable during distribution can be suppressed. However, in a hot season, gas damage to a fruit or vegetable itself, growth of microorganisms, and generation of aging hormones and an ethylene gas are promoted, resulting in occurrence of aging and ripeness and decay, and therefore it is required to perform low temperature control in combination. For example, when an ethylene gas exists even at a very low concentration of 0.005 ppm in each distribution process of a fruit or vegetable from a production area to a consumption area, 25 to 46% of the total amount of the distributed fruit or vegetable may be irreparably damaged. Thus, there is no safe level in ethylene gas concentration. Generally, in a storeroom at a distribution center, fully ripened agricultural products and agricultural products that are not fully ripened are mixed, and the loss of harvested agricultural products by an ethylene gas is calculated to be as high as 25 to 30%.

Thus, many enterprises have heretofore attained techniques for decomposing ethylene by photocatalysts. However, photocatalysts have the disadvantage that a light condition is required, and further, many hydroxyl radicals are generated by photocatalytic action, so that a plant such as a vegetable or fruit are damaged while ethylene is decomposed. In addition, a food freshness retaining agent with an oxygen scavenger used in combination is known to produce acetaldehyde. Not only an odor thereof is sensed as a stimulant/offensive order in bag opening, but also the order transferred to food gives unpleasantness and discomfort to a consumer when the food is eaten, and therefore it is necessary to remove the order.

Thus, the present invention relates to a functional film that efficiently adsorbs and decomposes ethylene generated from a plant or a food, the decomposition activity of which is capable of completely decomposing ethylene into water and carbon dioxide molecules not only under a light condition but also in a dark place. The present invention provides such a functional film, and a functional container. Further, the present invention provides a method for retaining freshness using the functional film or the functional container.

### SOLUTIONS TO PROBLEMS

(1) A functional film of the present invention is a sheet-like or layered plastic film capable of adsorbing ethylene to a surface thereof, and in the functional film, a substance having a catalytic function capable of decomposing the ethylene into carbon dioxide and water or/and discharging the ethylene from one surface to other surface of the functional film is contained in at least ppm order or ppb order, or applied to or deposited on the surface.
(2) A functional container of the present invention is obtained by forming the functional film according to (1) into a structure including at least one of a bag-like structure, a cylindrical structure, a tunnel structure, a layered structure, and a nested structure.
(3) In another aspect, the present invention may provide a plastic functional container which is formed in a predetermined solid shape, and is capable of adsorbing ethylene to a surface thereof, and in the functional container, a substance having a catalytic function capable of decomposing the ethylene into carbon dioxide and water is contained in at least ppm order or ppb order, or applied to or deposited on the surface.
(4) A method for retaining freshness of a plant or a food according to the present invention includes: an application step of applying the functional film according to (1) or the functional container according to (2) or (3) at a site where the plant or the food is preserved; and an adsorption step of adsorbing ethylene, which is generated from the plant or the food in a vicinity of the plant or the food, to the functional film according to claim 1 or the container according to claim 2.
(5) It is preferable that the method for retaining freshness according to (4) further includes the step of maintaining the carbon dioxide and the water, which are obtained by decomposing the ethylene adsorbed in the adsorption step, on a surface of the functional film according to (1) or a surface of the functional container according to (2) or (3).
(6) In another aspect, a method for retaining freshness of a plant or a food according to the present invention may include: an application step of applying the functional film according to (1) or the container according to (2) or (3) at a site where the plant or the food is preserved; and a discharge step of discharging the ethylene, which is generated from the plant or the food in a vicinity of the plant or the food, outside the functional film according to claim 1 or outside the container according to (2) or (3).
(7) In another aspect, a method for retaining freshness according to the present invention may be a method in which using the functional film according to (1) or the functional container according to (2) or (3), a degree of adsorption of ethylene generated from a plant or a food and a degree of decomposition of the ethylene into carbon dioxide and water are promoted to retain freshness of the plant or the food, the method including: an application step of applying the functional film according to (1) or the container according to (2) or (3) to a material for preservation or conveyance of the plant or the food; and a storage step of surrounding or enclosing the plant or the food in a vicinity of a surface of the plant or the food by the functional film according to claim 1 or the container according to claim 2 to store the plant or the food.

With the above-mentioned configuration, it is possible to perform plastic packaging storage in which a plant or a food can be stored for a long period of time while freshness of the plant or the food is retained not only under a light condition but also in a dark place. Here, the plastic packaging storage means that by packaging a plant or a food with a plastic film, transpiration and respiration actions during storage are suppressed taking advantage of a difference between water vapor permeability and gas permeability of the plastic film, and thus freshness can be retained over a long period of time. In a gas environment inside the hermetically sealed film, oxygen in the film is consumed by the respiration action of the plant or food itself, and a carbon dioxide gas is accumulated. When the gas environment inside the film varies depending on the environment temperature, the material of a packaging material, and the packaged plant or food, and for example, when a leaf vegetable is hermetical seal-packaged with 0.03 mm-thick low-density polyethylene film at low temperature (5°C or lower), the gas environment inside the film is stabilized at an oxygen concentration of 2 to 3% and a carbon dioxide gas concentration of 5 to 10%. Since in the air, the oxygen concentration is 20.9% and the carbon dioxide gas concentration is less than 0.1%, the environment inside the film has a lower oxygen concentration and a higher carbon dioxide gas concentration as compared to the air, and when storage under this environment is known to have a higher effect of suppressing reduction of freshness (CA effect) as compared to storage in the air.

Packaging storage by the above-described plastic film or plastic container is also called MA storage (modified atmosphere), and is used as an interior material in distribution of many plants or foods. As a purpose of packaging storage, mention is made of 1. suppression of shrinkage due to the transpiration action of a plant or food itself such as a fruit or vegetable, 2. suppression of mechanical damage to a surface, 3. suppression of dew condensation of a surface of a fruit or vegetable due to temperature fluctuation, and the like in addition to the CA effect.

Plastic films have different physical properties (water vapor permeability and gas permeability) depending on the material, stretching method, and thickness, and for example, a film that is used with a fruit or vegetable generally has low water vapor permeability and high gas permeability (LDPE (low-density polyethylene)). Packaging with a film having low water vapor permeability increases the inside humidity, leading to suppression of transpiration of a fruit or vegetable. The respiration action of a fruit or vegetable itself causes the inside of the film packaging to have a low oxygen concentration and a high carbon dioxide gas concentration, so that a respiration suppressing effect can be exhibited to retain freshness.

Examples of the plastic film material for use in the present invention will now be described. Examples of the material that is used besides LDPE: low-density polyethylene include HDPE: high-density polyethylene, OPP: stretched polypropylene, CPP: unstretched polypropylene, ON: stretched nylon (polyamide), CN: unstretched nylon (polyamide), BDR: polybutadiene, PMP: polymethylbenzene, BOV: stretched vinylon, OV: PVDC-coated stretched vinylon, PET: polyethylene terephthalate, PVDC: polyvinyl chloride, KOP: polyvinyl chloride-coated OPP, KON: polyvinylidene chloride-coated ON, EVOH: ethylene-vinyl alcohol copolymer, EVA: ethylene-vinyl acetate copolymer, PS: polystyrene, PT: ordinary cellophane, and MST: polymer-type moisture-proof cellophane.

However, in a film having low gas permeability, the carbon dioxide gas concentration is excessively high, leading to occurrence of gas damage (generation of an offensive odor, and water-soaked tissues). In addition, a fruit or vegetable is rarely distributed in the same temperature zone from the start point to the end of distribution, and temperature fluctuation, particularly temperature elevation in distribution at a constant-temperature after pre-cooling in a production area leads to an increase in ethylene gas concentration inside the film, so that aging/ripeness reaction is promoted, resulting in rapid reduction of freshness.

Thus, a substance (catalytic substance) having a catalytic capability of efficiently decomposing ethylene or/and discharging ethylene from the inside to the outside (from one surface to the other surface) of the functional film is added in a plastic film material having an ethylene adsorption effect, or applied to or deposited on the surface of the plastic film material. Here, examples of the substance having a catalytic capability of efficiently decomposing ethylene or/and discharging ethylene from the inside to the outside of the functional film include potassium permanganate, palladium chloride, nickel, platinum, iron oxide, titanium oxide, molybdenum oxide, tungsten oxide, zinc oxide, and modified organosilicon compounds obtained by coating such a substance with silicon. Such a substance is homogeneously mixed with (added in) the plastic film material at a final concentration of 0.1% to 10%, or applied to or deposited on a surface of the film material to impart a catalytic cycle function of decomposing ethylene, which is adsorbed on a surface of the functional film according to the present invention, into water and carbon dioxide that does not damage a plant or a food, or/and a function of discharging ethylene, which is adsorbed on the surface of the functional film, from the inside to the outside of the functional film, and suppression of release of water from a plant or a food by water and carbon dioxide generated by decomposition of an ethylene gas, and suppression of respiration by a carbon dioxide concentration increasing effect are efficiently achieved.

Particularly, when the functional film according to the present invention is applied in the vicinity of an epidermal tissue of a plant or a food, and ethylene generated from a plant or a food is accumulated on or near the surface of the functional film according to the present invention, the accumulated ethylene gas can be completely decomposed under a decomposable state to suppress transpiration by supply of generated water, and suppress respiration by an increase in concentration of carbon dioxide.

Accordingly, in generation of ethylene from a plant or a food, an ethylene adsorption capability is imparted to the nearby film. Therefore, the functional film according to the present invention, which is supported by ethylene, can itself function as an adsorbent for ethylene, ethylene is more easily adsorbed as compared to a conventional ethylene adsorbent. In addition, the respiration suppression and transpiration suppression effect induced by water and carbon dioxide generated by decomposition of ethylene can be improved more than before, and accordingly, it is possible to contribute to retention of freshness of a plant or a food. In addition, in the functional film according to the present invention, ethylene can be discharged from the inside to the outside of the functional film to contribute to retention of freshness of a plant or a food.

### BRIEF DESCRIPTION OF DRAWINGS

FIG. 1 is a diagram for illustrating the effect of attenuating ethylene by 30 ppm and 100 ppm for a 0.02 mm freshness retaining bag (masterbatch content: 0.6% (mass ratio)) in an example according to the present invention.
FIG. 2 is a diagram for illustrating the effect of attenuating ethylene by 30 ppm and 100 ppm for a 0.006 mm freshness retaining bag (masterbatch content: 0.6% (mass ratio)) in an example according to the present invention.
FIG. 3 is a diagram for illustrating the effect of attenuating ethylene by 100 ppm for a 0.01 mm freshness retaining bag (masterbatch content: 1.0% (mass ratio)) in an example according to the present invention.
FIG. 4 is a diagram for illustrating the effect of discharging ethylene by 100 ppm for a 0.01 mm freshness retaining bag (masterbatch content: 1.0% (mass ratio)) in an example according to the present invention.
FIG. 5 is a diagram showing the result of comparing measurement data for a standard ethylene gas in a control bag and a freshness retaining bag in an example according to the present invention.
FIG. 6 is a diagram showing a state of a decomposition process from ethylene to carbon dioxide in an example according to the present invention.
FIG. 7 is a diagram showing a state of an ethylene adsorption process of a low-density polyethylene bag (non-processed) in an example according to the present invention.
FIG. 8 is a diagram showing a state of a change in concentration of ethylene generated from a cherry tomato in a freshness retaining bag in an example according to the present invention. The blue bar indicates a non-processed low-density polyethylene bag, and the red bar indicates an ethylene concentration of a freshness retaining bag sample.
FIG. 9 is a diagram showing a state of a change in concentration of ethylene generated from spinach in a freshness retaining bag in an example according to the present invention.

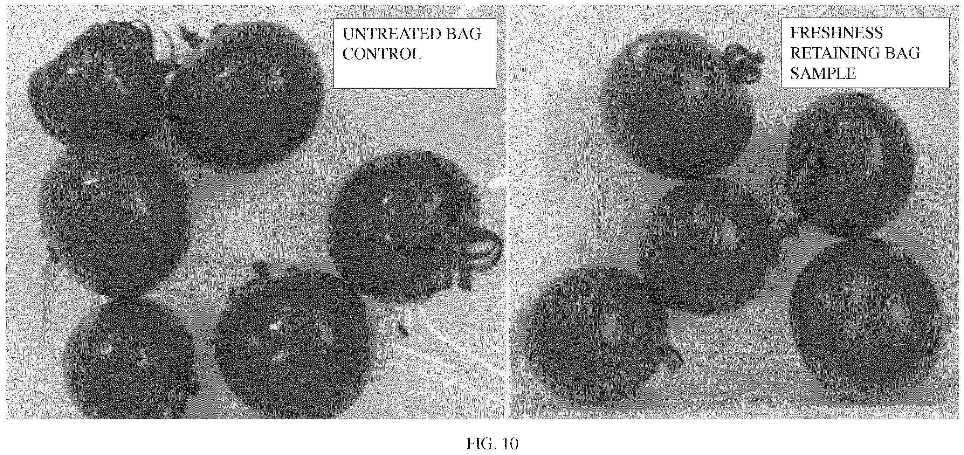

FIG. 10 is a diagram showing a preserved state of a cherry tomato after a preservation test in an example according to the present invention.

### DESCRIPTION OF EMBODIMENT

Hereinafter, an embodiment of the present invention will be described in detail.

A functional film and a functional container according to this embodiment are formed in the following manner: a granular compound (diameter: about 40 nm to 400 nm, preferably 100 nm to 200 nm) having the above-mentioned ethylene decomposition function is mixed with (added in) a predetermined film material at a volume ratio in at least ppm order or ppb order (about 1 ppb to 12 ppc (12%), preferably about 1 ppb to 5 ppc (5%)), or applied to or deposited on a surface of the film material. Specifically, it is possible to produce (1) a sheet-like functional film by performing film molding processing or inflation molding processing; (2) a multilayer functional film with an ethylene decomposition cycle, which is obtained by thermally depositing (heat-sealing) a functional film by T-die molding processing or lamination processing molding to bond the functional film to various films; and (3) a functional container obtained by processing the functional film in (1) or (2) into a bag-like structure, a cylindrical structure, a tunnel-like structure, a layered structure or a nested structure. Examples of the film material for use in this embodiment includes LDPE: low-density polyethylene, HDPE: high-density polyethylene, OPP: stretched polypropylene, CPP: unstretched polypropylene, ON: stretched nylon (polyamide), CN: unstretched nylon (polyamide), BDR: polybutadiene, PMP: polymethylbenzene, BOV: stretched vinylon, OV: PVDC-coated stretched vinylon, PET: polyethylene terephthalate, PVDC: polyvinyl chloride, KOP: polyvinyl chloride-coated OPP, KON: polyvinylidene chloride-coated ON, EVOH: ethylene-vinyl alcohol copolymer, EVA: ethylene-vinyl acetate copolymer, PS: polystyrene, PT: ordinary cellophane, and MST: polymer-type moisture-proof cellophane. When the compound having an ethylene decomposition function is mixed with the film material, the functional film and the functional container each have a thickness of, for example, 0.004 mm to 0.1 mm, and it is possible to absorb ethylene regardless of the thickness. The material of the functional film and the material of the functional container in this embodiment may be a mixture of two or more of the materials described above as examples. In addition, the film material for use in the embodiment of the present invention is not particularly limited as long as it is a material capable of adsorbing ethylene.

Here, a functional container according to another mode of this embodiment has a solid shape formed in, for example, a box-like shape with a lid by injection molding or the like, but the molding method is not limited as long as it is capable of forming a certain solid shape such as a box-like shape. In addition, the functional container according to another mode of this embodiment is formed in the following manner: a compound having the ethylene decomposition function is mixed (added), or formed into a solid boxy-like shape, and then applied to or deposited on the surface. Examples of the box-like shape here include a cube, a rectangular parallelepiped, a triangular prism, a cylinder, and a triangular pyramid, but the box-like shape is not limited as long as it can store an article therein. In addition, examples of the container material which is used for the functional container according to another mode and which adsorbs ethylene include low-density polyethylene (LDPE) (high-pressure method), linear low-density polyethylene (LLDPE), high-density polyethylene (HDPE) (low-pressure method), ultrahigh-molecular-weight polyethylene (UHMW-PE), crosslinked polyethylene, polyethylene terephthalate (PET), acrylonitrile-styrene (AS), polypropylene (PP), polystyrene (PS), polycyclohexanedimethylene terephthalate = highly-heat-resistance engineering plastic (PCT), saturated polyester resins, and polymethylpentene (TPX). The material of the functional container according to another mode may be a mixture of two or more of the materials described above as examples. In addition, the container material to be used in the functional container according to another mode is not particularly limited as long as it is a material capable of adsorbing ethylene.

A case where the functional film in this embodiment is used as a freshness retaining film will now be described. As a method for applying the freshness retaining film, for example, the freshness retaining film is processed into a bag-like shape or a container to obtain a freshness retaining bag or a freshness retaining container, and a plant or food such as a fruit or vegetable is encapsulated therein; a plant or food such as a fruit or vegetable is covered with the freshness retaining film to bring the freshness retaining film into direct contact with the plant or food such as a fruit or vegetable; or the functional film is directly attached to an inner surface of a corrugated board, a container or the like for preserving a plant or food such as a fruit or vegetable, or attached to an inner surface of equipment such as a storage warehouse for preserving a plant or food such as a fruit or vegetable. In addition, for example, the functional film may be attached to a ventilation device or an air suction device in a storage warehouse for a plant or food such as a fruit or vegetable, etc.

The fruit or vegetable to be preserved using the freshness retaining bag and the freshness retaining container in this embodiment should be appropriately determined according to the type of a plant, the method for growing a plant, the climate, and the like.

The compound having an ethylene decomposition function (catalytic substance) is capable of removing not only ethylene generated from a plant or food such as a fruit or vegetable, but also a corrosive gas, such as aldehyde, which causes corrosion. By performing a corrosive gas decomposition treatment while removing ethylene after preservation, the freshness retaining effect is improved. As a condition for retaining freshness, ethylene decomposition is performed in a dark place almost as well as under a light condition. In addition, even when the gas component is changed under a humidity retaining condition which is an important factor in the preservation of a plant or food such as a fruit or vegetable, ethylene decomposition performance is exhibited as well as under a low-humidity condition. Specifically, humidification of the inside of an individual packaging or adjustment of a gas partial pressure is preferable for retaining freshness, and particularly, it is more preferable that the freshness retaining sheet is applied so as to be disposed in the vicinity of the surface of a plant or food (e.g. the surface of a fruit part of a fruit or vegetable).

Here, the freshness retaining bag has a hollow structure having a high porosity and specific surface area, or a ventilation function, and therefore by decomposition of ethylene, the minimum amount of oxygen given for respiration of a plant can be supplied, and carbon dioxide that further suppresses respiration can be provided. Accordingly, freshness is easily retained via suppression of respiration of a plant or food such as a fruit or vegetable, so that the storable duration can be increased. The freshness retaining bag and the freshness retaining container have a high water adsorbing power (power of adsorbing water) on the surface, and can impart water retainability and moisture retainability to a plant or food such as a fruit or vegetable.

Thus, when the freshness retaining bag or freshness retaining container is applied in preservation of a plant or food such as a fruit or vegetable, ethylene is effectively decomposed, and ethylene of the functional film is infectiously decomposed into carbon dioxide and water, so that retention of freshness can be eventually promoted by suppressing respiration of the plant or food such as a fruit or vegetable, and imparting humidity to the plant or food such as a fruit or vegetable.

### EXAMPLES

Hereinafter, the present invention will be described more in detail by way of examples.

An ethylene gas decomposition test was conducted using low-density polyethylene as the freshness retaining bag. Here, as a material of the low-density polyethylene bag, one obtained by mixing an AP-MO masterbatch dispersion liquid (hereinafter, sometimes referred to simply as a "masterbatch") from Nissho Chemical Co., Ltd. with low-density polyethylene and high-density polyethylene at a mass ratio of 0.1 % to 10% was used.

First, a standard gas of ethylene in air in sample bags was diluted with dry air free from ethylene to prepare 1000 cc Tedlar bags (gas analysis sampling bags made of vinyl fluoride resin) containing gases with ethylene concentrations of 10 ppm, 30 ppm, 100 ppm, and 300 ppm, respectively, and a demonstration test on absorption and decomposition of ethylene was conducted using these bags. The standard ethylene gas was introduced into a freshness retaining bag sample (masterbatch content: 0.6% (mass ratio), thickness: 0.02 mm or 0.006 mm), and the absorption and decomposition amounts of ethylene was measured with a time-dependently change. In addition, for determining whether an ethylene gas was decomposed, the amount of emission of CO₂ in the Tedlar bag was measured using a detection tube. As a measurement time, the amount was measured after 0, 3, 12, and 24 hours.

Similarly, the standard ethylene gas was introduced in an amount of 100 ppm into a freshness retaining bag sample (masterbatch content: 1.0% (mass ratio), thickness: 0.01 mm or 0.02 mm), and the absorption and decomposition amounts of ethylene was measured with a time-dependently change. In addition, for determining whether an ethylene gas was decomposed and discharged, the amount of emission of CO₂ in the Tedlar bag was measured using a detection tube. As a measurement time, the amount was measured after 0, 3, 6, 12, 18, and 24 hours.

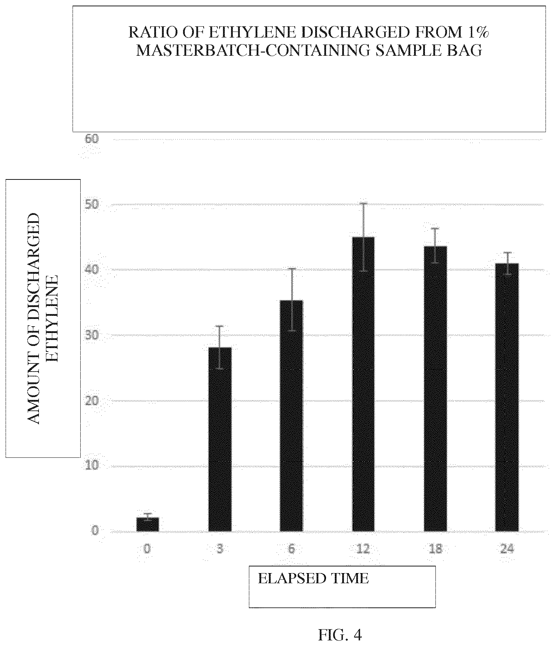

Further, a freshness retaining bag sample (masterbatch content: 0.6% (mass ratio), thickness: 0.01 mm or 0.02 mm, 150 mm (length) x 150 mm (width)) containing 100 cc of the 100 ppm standard ethylene gas was put in a 1000 cc Tedlar bag (gas analysis sampling bag made of vinyl fluoride resin), and the amount of ethylene discharged from the sample bag into the Tedlar bag was measured with a time-dependently change. As a measurement time, the amount was measured after 0, 3, 6, 12, 18, and 24 hours. FIG. 4 indicates that about 40% of ethylene is discharged from the sample bag 24 hours after the start of the test.

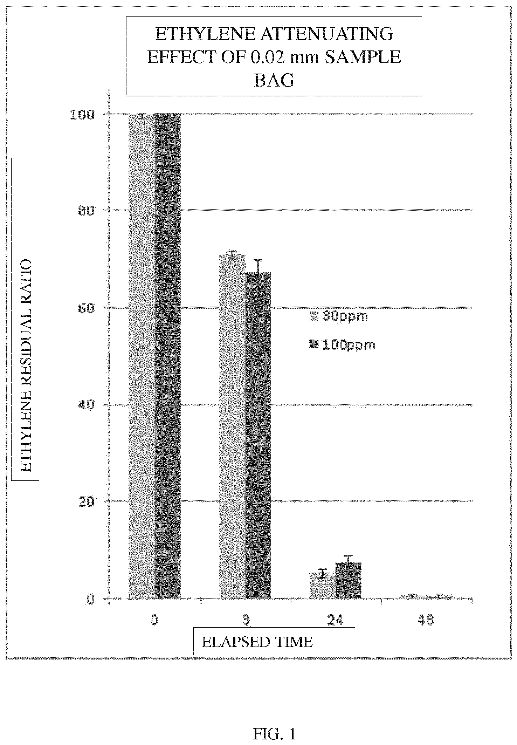

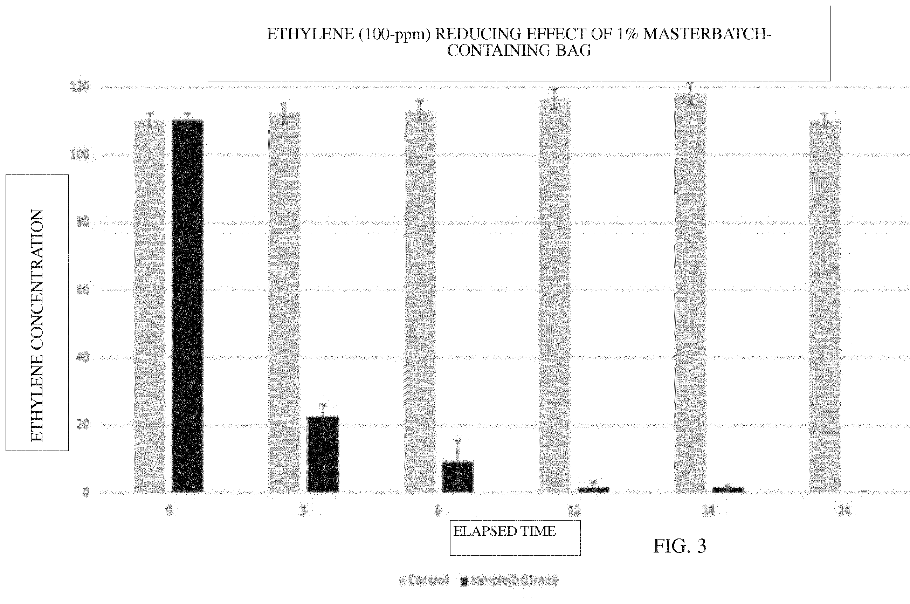

As shown in FIGS. 1 to 6, the effect of attenuating the ethylene standard gas was measured until 48 hours after the start of the test. It was evident that the standard ethylene gas was decomposed or/and discharged after 24 hours in the freshness retaining bag.

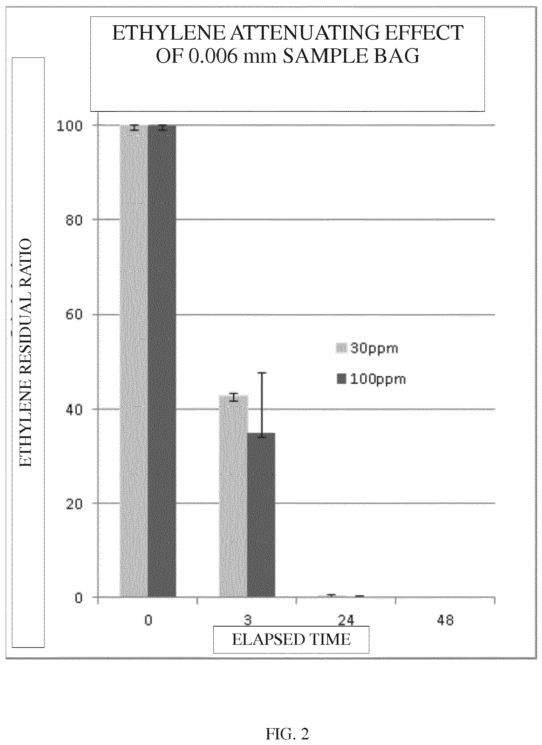

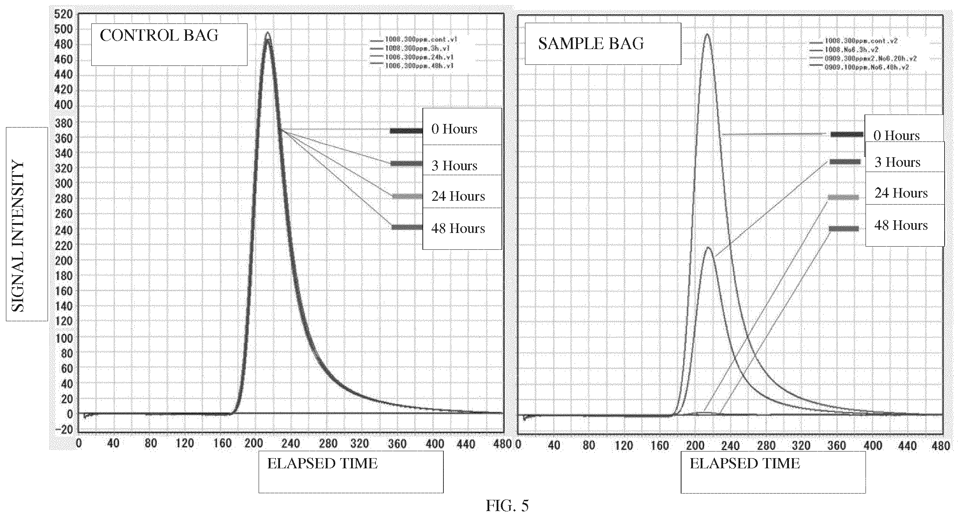

The results in FIGS. 1 and 2 showed that both the 30 ppm and 100 ppm standard ethylene gases were decomposed regardless of the difference in thicknesses of the freshness retaining bag (0.02 mm and 0.006 mm). Detailed comparison between the thickness of the freshness retaining bag and the ethylene decomposition effect showed that the thinner freshness retaining bag (masterbatch content: 0.6% (mass ratio), thickness: 0.006 mm) had higher efficiency, and the freshness retaining bag (masterbatch content: 1.0% (mass ratio), thickness: 0.01 mm) decomposed ethylene in a larger amount. In addition, the results in FIG. 5 showed that as compared to the control bag, the freshness retaining bag (sample bag) according to the present invention more efficiently decomposed even a high-concentration ethylene gas with a concentration of standard ethylene (300 ppm) as well as low-concentration ethylene (10 ppm, 30 ppm and 100 ppm). Thus, the freshness retaining bag was confirmed to contribute to retention of freshness of a plant.

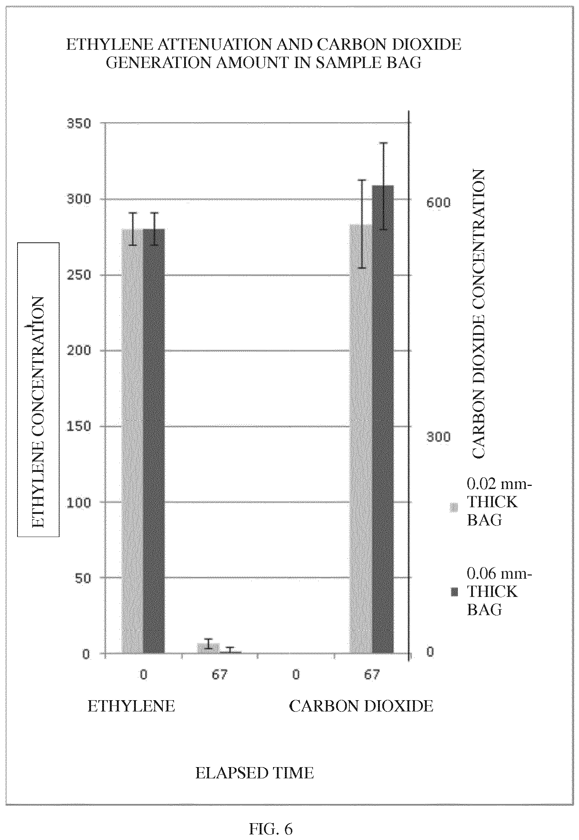

The results in FIG. 6 showed that 600 ppm of carbon dioxide was generated from 300 ppm of ethylene, and therefore it was revealed that in this example, one ethylene molecule was decomposed into two carbon dioxide molecules.

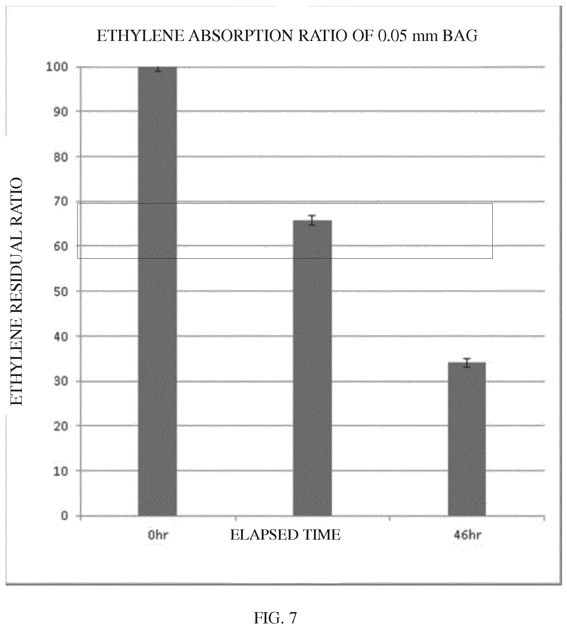

The results in FIG. 7 show that the untreated low-density polyethylene bag adsorbs ethylene. 1 liter of 300 ppm ethylene was encapsulated in a 0.05 mm-thick low-density polyethylene bag, and how much ethylene was adsorbed was examined. The result showed that about 30% of ethylene was adsorbed in twenty and several hours. The result of measuring the concentration of carbon dioxide in the bag showed that the carbon dioxide concentration was not so high, and this indicated that even if ethylene was not decomposed, the ethylene was adsorbed and desorbed with its high affinity for the film material.

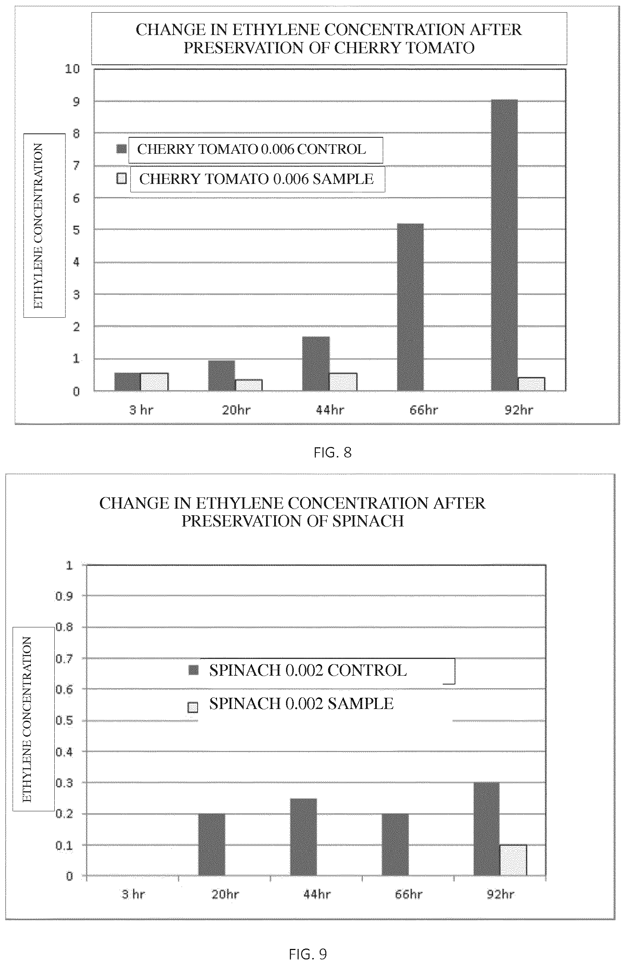

In addition, as fruits, normally grown fruits having uniform sizes wherever possible were picked up and used. The fruits were put in the freshness retaining bags (sample bags) according to the present invention immediately after being taken, and the respiration amount and the ethylene production amount were measured for about 5 days. For the respiration amount, the amount of emission of CO2 was measured using a detection tube. Specifically, a polyethylene bag containing only a fruit as a positive control, and a freshness retaining bag (sample bag) containing an ethylene adsorbent were prepared, and ethylene production and removal effects were compared and examined. For the ethylene production amount, air in the sample bag was fully replaced by ethylene-free air immediately after measurement of the respiration amount, the fruit was then hermetically sealed in one Tedlar bag for a certain period of time, about 20 ml of air was taken from the head space of the bag, 1 ml of air was taken therefrom, the ethylene concentration was measured by gas chromatography, and the ethylene production/adsorption amount with the fruit was determined. The column used was packed column, the column temperature was 100°C, air was used as a carrier, and a FID detector was used. Ethylene was measured twice or more per sample, and the result is shown as an average value. The detection limit concentration of ethylene is 0.5 ppm. In the experiment, measurement was performed for 3 samples per product, and continuously for 5 days. FIG. 6 shows a change in ethylene concentration when a cherry tomato is encapsulated in the freshness retaining bag (sample bag) according to the present invention, and the freshness retaining effect was examined at a normal temperature of 25°C for 5 days. In the non-processed low-density polyethylene bag, the ethylene concentration in the bag gradually increased, whereas in the freshness retaining bag (sample bag) according to the present invention, the ethylene concentration did not increase even with elapse of time. In addition, after 66 hours, the ethylene concentration was below the detection limit (0.1 ppm) in the freshness retaining bag (sample bag) according to the present invention, and thus measurement was difficult. These results show that the freshness retaining bag (sample bag) according to the present invention efficiently decomposes ethylene generated from the tomato, and as a result of the decomposition, an effect of improving freshness is exhibited. FIG. 8 shows a photograph of a preserved state of cherry tomatoes one week after the preservation test. In many of non-processed LDPE low-density polyethylene bags, dew condensation occurred on the surface of the fruit, softening of the fruit proceeded, so that the shape of the tomato was collapsed. On the other hand, it was revealed that when the freshness retaining bag (sample bag) according to the present invention was used, dew condensation did not occur on the surface of the tomato, the fruit was well shaped, and freshness was retained.

FIG. 9 shows a change in ethylene concentration when spinach is encapsulated in the freshness retaining bag (sample bag) according to the present invention, and the freshness retaining effect was examined at a normal temperature of 25°C for 1 week. In the non-processed low-density polyethylene bag, an ethylene concentration of 0.2 ppm to 0.3 ppm was constantly observed, whereas in the freshness retaining bag (sample bag) according to the present invention, detection of ethylene was difficult for up to 92 hours. These results show that the freshness retaining bag (sample bag) according to the present invention efficiently decomposes ethylene generated from the spinach, and as a result of the decomposition, an effect of improving freshness is exhibited.

The above results showed that by mixing an ethylene decomposing catalytic substance with a film material having ethylene adsorption performance, ethylene was adsorbed and decomposed in a short time, and completely decomposed into carbon dioxide and water, or/and by discharging ethylene from the vicinity of a fruit or vegetable, the aging/ripeness effect of ethylene is reduced, respiration of the fruit or vegetable is suppressed, and transpiration from the surface of the fruit is suppressed. Thus, effects such as retention of freshness of a fruit or vegetable were obtained.

While the embodiment of the present invention has been described above, the specific configuration should not be construed to be limited to the embodiment. The scope of the present invention is given by claims rather than the description of the embodiment above, and includes meanings equivalent to claims, and all changes within the scope. For example, the present invention is effective for cultivation of not only of fruits and vegetables such as tomatoes but also root vegetables, cultivation of flowers such as orchids, cultivation of leaves in plant factories, and retention of freshness of mushrooms.

## Claims

1. A functional film which is a sheet-like plastic film capable of adsorbing ethylene to a surface thereof, wherein
a substance having a catalytic function capable of decomposing the ethylene into carbon dioxide and water or/and discharging the ethylene from one surface to other surface of the functional film is contained in at least ppm order or ppb order, or applied to or deposited on the surface.

2. A functional container which is obtained by forming the functional film according to claim 1 into a structure including at least one of a bag-like structure, a cylindrical structure, a tunnel structure, a layered structure, and a nested structure.

3. A plastic functional container which is formed in a predetermined solid shape, and is capable of adsorbing ethylene to a surface thereof, wherein
a substance having a catalytic function capable of decomposing the ethylene into carbon dioxide and water is contained in at least ppm order or ppb order, or applied to or deposited on the surface.

4. A method for retaining freshness of a plant or a food,
the method comprising:
an application step of applying the functional film according to claim 1 or the container according to claim 2 or 3 at a site where the plant or the food is preserved; and
an adsorption step of adsorbing the ethylene, which is generated from the plant or the food in a vicinity of the plant or the food, to the functional film according to claim 1 or the container according to claim 2 or 3.

5. The method for retaining freshness according to claim 4, further comprising the step of maintaining the carbon dioxide and the water, which are obtained by decomposing the ethylene adsorbed in the adsorption step, on a surface of the functional film according to claim 1 or a surface of the container according to claim 2 or 3.

6. A method for retaining freshness of a plant or a food,
the method comprising:
an application step of applying the functional film according to claim 1 or the container according to claim 2 or 3 at a site where the plant or the food is preserved; and
a discharge step of discharging the ethylene, which is generated from the plant or the food in a vicinity of the plant or the food, outside the functional film according to claim 1 or outside the container according to claim 2 or 3.

7. A method for retaining freshness in which using the functional film according to claim 1 or the container according to claim 2 or 3, a degree of adsorption of ethylene generated from a plant or a food and a degree of decomposition of the ethylene into carbon dioxide and water are promoted to retain freshness of the plant or the food,
the method comprising:
an application step of applying the functional film according to claim 1 or the container according to claim 2 or 3 to a material for preservation or conveyance of the plant or the food; and
a storage step of surrounding or enclosing the plant or the food in a vicinity of a surface of the plant or the food by the functional film according to claim 1 or the container according to claim 2 or 3 to store the plant or the food.
